(19) Europäisches Patentamt
European Patent Office
Office européen des brevets

(11) EP 2 675 242 B1

(12) **EUROPEAN PATENT SPECIFICATION**

(45) Date of publication and mention
of the grant of the patent:
**16.09.2015 Bulletin 2015/38**

(21) Application number: **12744889.2**

(22) Date of filing: **26.01.2012**

(51) Int Cl.:
*H05B 6/12* *(2006.01)*    *H05B 6/44* *(2006.01)*

(86) International application number:
**PCT/JP2012/000481**

(87) International publication number:
**WO 2012/108135 (16.08.2012 Gazette 2012/33)**

(54) **INDUCTIVE HEATING COOKER**

INDUKTIONSHERD

CUISINIÈRE À CHAUFFAGE INDUCTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2011 JP 2011027580**

(43) Date of publication of application:
**18.12.2013 Bulletin 2013/51**

(73) Proprietors:
• **Mitsubishi Electric Corporation
Tokyo 100-8310 (JP)**
• **Mitsubishi Electric Home Appliance Co., Ltd.
Fukaya-shi, Saitama 369-1295 (JP)**

(72) Inventors:
• **SEKINE, Katsunori
Fukaya-shi
Saitama 369-1295 (JP)**
• **TANAKA, Michio
Fukaya-shi
Saitama 369-1295 (JP)**

(74) Representative: **Pfenning, Meinig & Partner GbR
Patent- und Rechtsanwälte
Theresienhöhe 11a
80339 München (DE)**

(56) References cited:
**EP-A1- 1 575 336      WO-A1-2010/101135
WO-A1-2010/101135    JP-A- 2002 075 612
JP-A- 2010 073 385**

**Description**

Technical Field

The present invention relates to an induction cooker that cooks by utilizing electromagnetic induction.

Background Art

Induction cookers are hitherto known in each of which a plurality of coils that are arranged concentrically are built in one base called coil base, and the coils in combination perform induction heating. In such an induction cooker, the positions of the coils are retained (fixed) by restraining the winding-terminal end and the central portion of each coil.

For example, a first hole and a second hole are provided in the coil base at a position corresponding to the central portion of the coil and a position corresponding to the winding-terminal end of the coil, respectively; a portion of the coil wire (electric wire) at the starting end of the coil is made to pass through the first hole; and a portion of the coil wire (electric wire) at the winding-terminal end of the coil is made to pass through the second hole, whereby the position of the coil is retained.

Instead of conventionally providing one disc-shaped coil on a coil base, the following configuration may be employed. A plurality of substantially elliptically wound coils are prepared, and a stress is applied to each of the coils from one longitudinal outer circumferential side toward the inner side such that the coil has a concave portion (hereinafter the coil is referred to as differently shaped coil). The differently shaped coils are arranged around the conventional disc-shaped coil such that the concave portions extend along the outer circumference of the conventional disc-shaped coil. In such a configuration, a current can be supplied to desired ones of the coils in accordance with the shape or the position of a large heating target placed on the top plate, whereby power consumption can be reduced.

Alternatively, a plurality of disc-shaped coils that are of smaller sizes than the conventional coil may be closely arranged on a coil base. In such a configuration also, a current can be supplied to some of the coils that correspond to the shape of the heating target placed on the top plate, whereby power consumption can be reduced.

EP 1 575 336 A1 discloses an induction cooker according to the preamble of claim 1.

Summary of Invention

Technical Problem

There is a problem, however, in that the above coil-retaining technique, which is applicable to a concentrically wound coil, is not applicable to the case where a plurality of differently shaped coils are arranged around a conventional disc-shaped coil and the case where a plurality of small coils are closely arranged on a coil base as described above.

This is because of the following reasons.

Each of the differently shaped coils is obtained by winding a coil wire elliptically with the use of jigs and applying a stress to the elliptical coil from one outer circumferential side toward the inner side of the coil, whereby the coil has a concave portion on that outer circumferential side. Meanwhile, a stress is also applied to another portion of the differently shaped coil that is opposite the concave portion from the inner side toward the outer side, whereby the coil has a convex portion. Hence, restoring forces that cause the concave portion and the convex portion of the differently shaped coil to return to their initial substantially linear positions are constantly acts on the concave portion and the convex portion. Therefore, unless any measures are taken, the heating coil may be displaced and come into contact with the main coil that is wound concentrically. In such a case, if a high-frequency current at one high-frequency is supplied to the differently shaped coil while a high-frequency current at another, different high-frequency is supplied to the main coil, high-frequency vibrations that are slight but different from each other may occur in the respective coils. With the difference in vibrations, the differently shaped coil and the main coil rub together at the contact part therebetween. Consequently, insulating films provided over the coil wires may peel, leading to discharge due to any short circuits. Even if the vibrations are at the same frequency but are out of phase, the same problem occurs.

Furthermore, since a plurality of small coils are closely arranged on a coil base, in a case where currents in different directions are supplied to adjacent ones of the coils, an attractive force acts between the adjacent coils. Moreover, since high-frequency currents are supplied to the coils and high-frequency vibrations therefore occur in the coils, the coils that are attracted to each other with the attractive force may come into contact with each other and rub together with the vibrations. Such a situation may also lead to the problem described above.

In addition, the case of a plurality of concentrically arranged coils has another problem in that the performance of cooling coils may be deteriorated because coils on the outer side surround coils on the inner side, and the coils on the inner side surround the center coil.

To solve the above problems, it is a major object of the present invention to provide an induction cooker in which, in a case where a plurality of differently shaped coils are arranged around a conventional disc-shaped coil on a coil base, the disc-shaped coil and each of the differently shaped coils are retained at a predetermined distance or farther from each other, whereby stable characteristics are provided.

It is another object of the present invention to provide an induction cooker in which, in a case where a plurality of small coils each having a relatively small diameter are relatively closely arranged on a coil base, adjacent ones of the coils are retained at a predetermined distance or farther from each other, whereby stable characteristics are provided.

Solution to Problem

An induction cooker according to the present invention is defined in claim 1.

Advantageous Effects of Invention

According to the present invention, the coil base on which the first coil and the second coils are provided is provided. Furthermore, the insulating member is provided on the coil base. The insulating member prevents the first coil and the second coils from coming into contact with each other with deformation of any of the second coils or prevents the concave portion and the convex portion of each of the second coils from coming into contact with each other, and has an insulation constant larger than or equal to a predetermined value. Therefore, adjacent ones of the coils are retained at a predetermined distance or farther from each other, whereby stable characteristics are provided. Consequently, the occurrence of discharge is prevented.

Brief Description of Drawings

[Fig. 1] Fig. 1 is a perspective view illustrating an outline of an induction cooker according to Embodiment 1 of the present invention.
[Fig. 2] Fig. 2 is a plan view illustrating a configuration of coils included in the induction cooker according to Embodiment 1 of the present invention.
[Fig. 3] Fig. 3 is a plan view illustrating a configuration of coils included in an induction cooker according to Embodiment 2 of the present invention.
[Fig. 4] Fig. 4 is a sectional side view illustrating a configuration of coils included in an induction cooker according to Embodiment 3 of the present invention.
[Fig. 5] Fig. 5 is a plan view illustrating an outline configuration of an induction heating unit 3 included in an induction cooker according to Embodiment 4 of the present invention.
[Fig. 6] Fig. 6 is a plan view illustrating an arrangement of coils and insulating members, the insulating members each having a larger width than insulating members illustrated in Fig. 5.
[Fig. 7] Fig. 7 is a sectional side view illustrating a state where an insulating member is interposed between the coils illustrated in Fig. 6.

Description of Embodiments

Embodiment 1

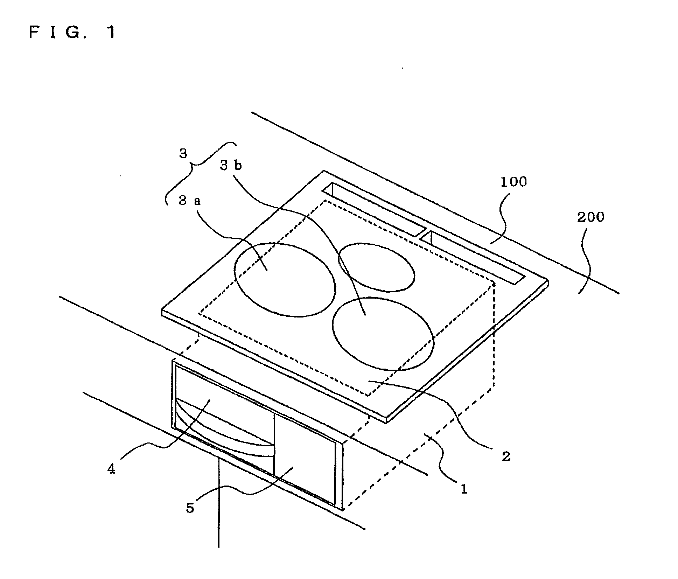

Fig. 1 is a perspective view illustrating an outline of an induction cooker according to Embodiment 1 of the present invention in a state where the induction cooker is installed in a kitchen counter. As illustrated in Fig. 1, an induction cooker 100 includes a main body 1 installed in a kitchen counter 200, and a top plate 2 provided over an upper portion of the main body 1 and on which a heating target, such as a pot, is to be placed. The main body 1 is provided with induction heating units 3a and 3b that are provided on the right and left sides, respectively, and each heat the heating target, and a grill unit 4 having a door at the front. In a state where the induction cooker 100 is installed in the kitchen counter 200, the top surface of the kitchen counter 200 and the upper surface of the top plate 2 are substantially flush with each other. In this state, the grill door and a front design panel 5 of the main body 1 are exposed on the front. Hereinafter, the induction heating units 3a and 3b are collectively denoted as induction heating units 3.

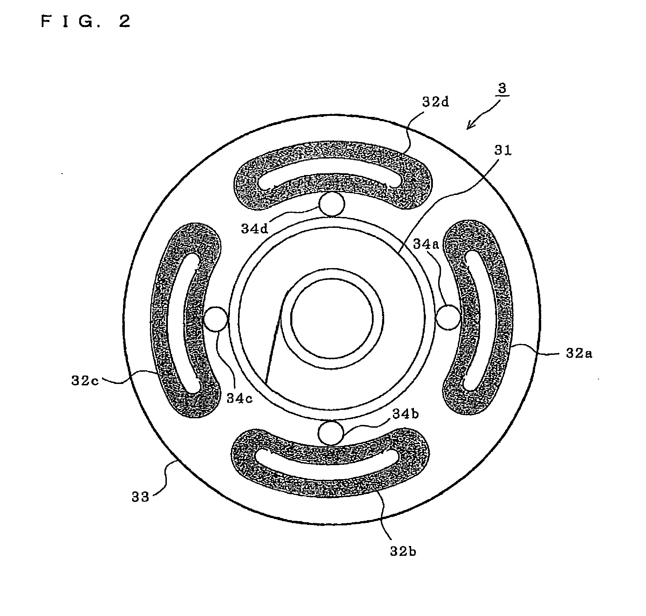

Fig. 2 is a plan view illustrating a configuration of coils included in the induction cooker according to Embodiment 1 of the present invention.

As illustrated in Fig. 2, each induction heating unit 3 includes a disc-shaped main coil (also referred to as first coil) 31, a plurality of substantially elliptically wound coils (hereinafter referred to as differently shaped coils, or second coils also) 32 provided around the main coil 31 and fixed at a substantially constant predetermined interval (in the example illustrated in Fig. 2, four differently shaped coils 32 are provided point-symmetrically with respect to the center of the main coil), a coil base 33 on which the main coil 31 and the differently shaped coils 32 are provided, and insulating members 34 provided on the coil base 33 and each positioned between the main coil 31 and a corresponding one of the differently shaped coils 32.

The differently shaped coils 32 are each obtained in the following manner. A coil wire (electric wire) is wound substantially elliptically into a coil; a stress is applied to one longitudinal side of the outer circumference of the coil from the outer circumferential side toward the inner side, whereby a concave portion extending substantially parallel to the outer circumference of the main coil 31 is formed while a convex portion extending substantially parallel to the concave portion is formed on the other longitudinal side of the outer circumference of the coil that is opposite the concave portion.

The insulating members 34 are each provided between the first coil and a corresponding one of the second coils such that a line connecting the center of the concave portion and the center of the convex portion of the second coil passes through the center axis of the insulating member 34. The insulating member 34 has a substantially columnar shape.

In Fig. 2, four differently shaped coils 32 are provided and are denoted by reference numerals 32a to 32d, respectively.

Likewise, four insulating members 34 are provided and are denoted by reference numerals 34a to 34d, respectively.

The insulating members 34 are each in contact with at least the outer circumference of the main coil 31 and the outer circumferential side of the thus obtained differently shaped coil 32 on which the concave portion is provided.

Hence, according to Embodiment 1, a plurality of differently shaped coils arranged on a coil base and each having a concave portion on the outer side thereof can be held on the coil base stably and in a uniform state even in case of any deformations in the differently shaped coils. Therefore, even if there are any assembly variations, a highly safe induction cooker is provided.

Furthermore, according to the present invention in which the plurality of differently shaped coils each having the concave portion are held on the coil base, the insulating members are provided so that, if any of the concave portions tends to deform linearly under a restoring force, the occurrence of such deformation is suppressed and a predetermined insulation constant (insulation resistance value) is obtained. Therefore, by setting the plurality of coils at a constant distance from one another, predetermined insulating performance is provided. Moreover, for example, the occurrence of nonuniformity in heating caused by such deformation is also suppressed.

Particularly, since the insulating members are provided on the outer circumferences of the coils, the occurrence of protrusion of any coil wires from the coil base is suppressed. Consequently, for example, the influence of a magnetic field produced when the coils are energized upon components provided around the coil base is reduced.

Furthermore, the insulating members, which are made of silicon or the like having a larger insulation constant than air, are provided such that the upper ends thereof are at a level higher than the upper coil surfaces of the main coil 31 and the differently shaped coils 32.

Hence, the occurrence of any discharge between the main coil 31 and the differently shaped coils 32 is prevented.

Embodiment 2

Fig. 1 is also referred to in Embodiment 2.

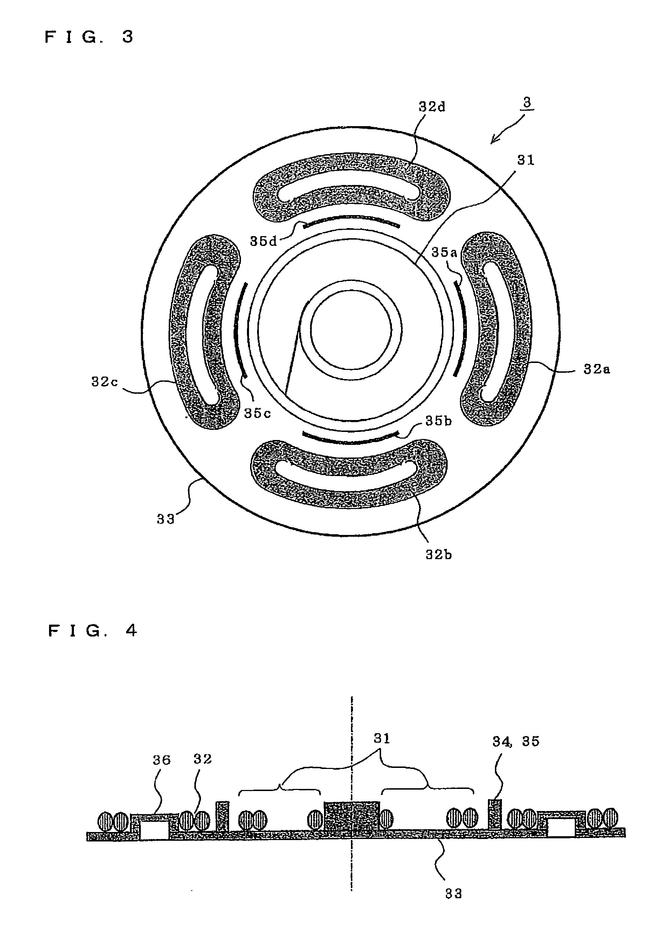

Fig. 3 is a plan view illustrating a configuration of coils included in an induction cooker according to Embodiment 2 of the present invention.

The configuration illustrated in Fig. 3 is the same as the configuration illustrated in Fig. 2, except for the configuration of the insulating members.

Insulating members 35 are each provided between the outer circumference of the main coil 31 and a side of the outer circumference of a corresponding one of the differently shaped coils 32 on which the concave portion is provided. The insulating members 35 each extend along substantially the entirety of the concave portion.

In Fig. 3, four insulating members 35 are provided and are denoted by reference numerals 35a to 35d, respectively.

According to Embodiment 2, the following advantageous effect is produced in addition to the advantageous effects produced in Embodiment 1: since the insulation between the main coil and the differently shaped coils is further improved, a highly insulating characteristic is provided.

Embodiment 3

Fig. 1 is also referred to in Embodiment 3.

Fig. 4 is a sectional side view illustrating a configuration of coils included in an induction cooker according to Embodiment 3 of the present invention.

As illustrated in Fig. 4, the insulating members according to Embodiment 1 or 2 are not provided on the inner side of the respective differently shaped coils. Instead, the coil base 33 is drawn in such a manner as to have insulating members 36. The insulating members 36 are formed as projecting portions each extending parallel to the outer circumference of the main coil 31. The insulating members 36 may each extend continuously over the entire area on the inner side of a corresponding one of the differently shaped coils, or may each be provided discontinuously.

According to Embodiment 3, the following advantageous effect is produced in addition to the advantageous effects produced in Embodiment 1: since the differently shaped coils are each generally restrained further on the inner side thereof, the restoring force acting on the convex portion does not push back the concave portion. Thus, the restoring force is suppressed.

Embodiment 4

While Embodiments 1 to 3 above each concern insulation between the main coil and the plurality of differently shaped coils provided therearound, the present invention is also applicable to a case where many small disc-shaped coils having smaller diameters than the above main coil are provided. Embodiment 4 concerns insulation between a plurality of small-diameter coils that are provided on one coil base.

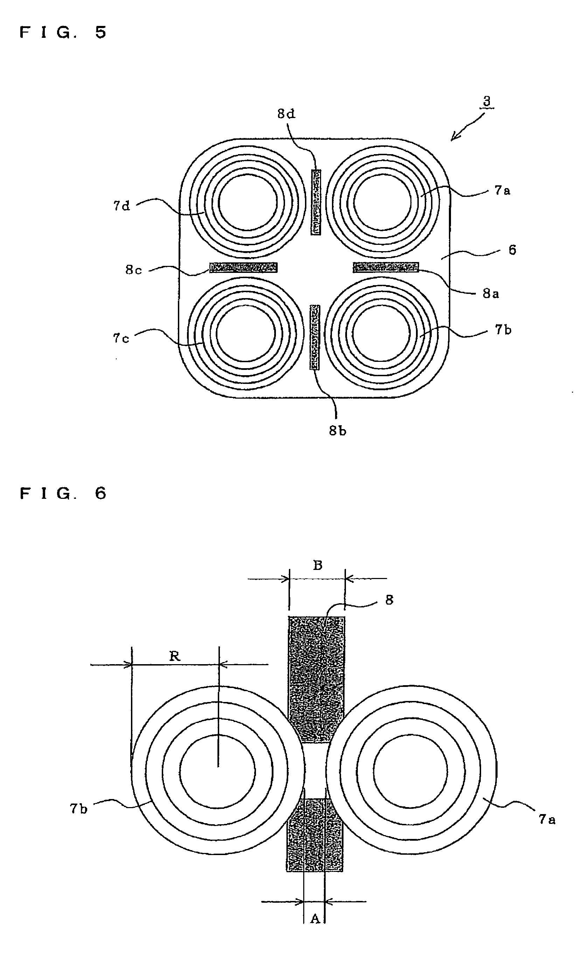

Fig. 5 is a plan view illustrating an outline configuration of an induction heating unit 3 included in an induction cooker according to Embodiment 4 of the present invention.

As illustrated in Fig. 5, the induction heating unit 3 includes a plurality of small-diameter coils 7 each having a smaller diameter than conventional coils and provided on one coil base 6, and insulating members 8 made of silicon and each interposed between adjacent ones of the small-diameter coils 7. In the example illustrated in Fig. 5, the coil base 6 has a substantially square shape. Four small-diameter coils 7a to 7d are provided on the coil base 6 in a two-by-two arrangement. An insulating member 8a is interposed between the small-diameter coils 7a and 7b. An insulating member 8b is interposed between the small-diameter coils 7b and 7c. An insulating member 8c is interposed between the small-diameter coils 7c and 7d. An insulating member 8d is interposed between the small-diameter coils 7d and 7a. Thus, the small-diameter coils 7 are prevented from coming into contact with one another.

While the above example concerns a case where the insulating members 8, each having a smaller width than the distance between adjacent ones of the small-diameter coils 7, are each interposed between adjacent ones of the small-diameter coils 7, the insulating members 8 may each have a larger width than the distance between adjacent ones of the small-diameter coils 7.

Fig. 6 is a plan view illustrating the arrangement of the small-diameter coils 7 and insulating members 8, the insulating members 8 each having a larger width than the insulating members illustrated in Fig. 5.

Let the distance between adjacent ones of the small-diameter coils 7 be A and the radius of each of the small-diameter coils 7 be R, and suppose that a width B of each of the insulating members 8 satisfies Expression (1) given below.

In this case, when the insulating members 8 are each pushed into the gap between adjacent ones of the small-diameter coils 7, the distance between adjacent ones of the coils is maintained to be constant even if currents in different directions flow in the two small-diameter coils 7, respectively, and an attractive force acts between the two.

$$A < B < A+2R \cdots (1)$$

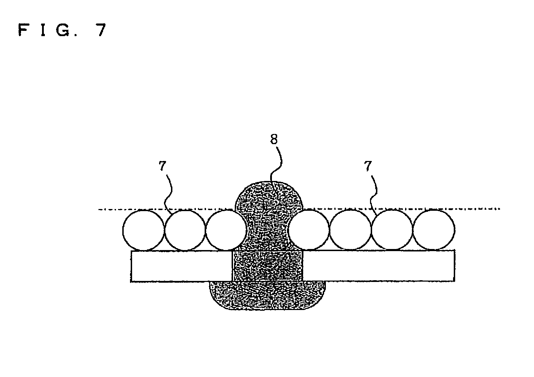

Fig. 7 is a sectional side view illustrating a state where an insulating member is interposed between the coils illustrated in Fig. 6.

As illustrated in Fig. 7, silicon, which has a larger insulation constant than air, is provided up to a level higher than the upper coil surfaces of the small-diameter coils 7.

Thus, the occurrence of any discharge between the coils is prevented.

While the above example concerns a case where the insulating members are made of silicon, the insulating members may be made of any other materials having a larger insulating constant than air.

In that case also, the same advantageous effect is produced.

In addition, the insulating members 34 or 35 may be formed integrally with the coil base 33. In such a case, the reaction force exerted by the insulating members against the deformation of the coils increases.

Industrial Applicability

The induction cooker according to the present invention is applicable to a wide range of industries concerning the manufacture, sales, and use of cookers. Reference Signs List

1 main body; 2 top plate; 3, 3a, 3b induction heating unit; 4 grill unit; 5 front design panel; 6 coil base; 7, 7a to d small-diameter coil; 8, 8a to d insulating member; 31 main coil (first coil); 32 differently shaped coil (second coil); 33 coil base; 34, 34a to d insulating member; 35, 35a to d insulating member; 100 induction cooker; 200 kitchen counter;

## Claims

1. An induction cooker comprising:

    a main body (1) forming an outer casing, and a top plate (2) provided over an upper portion of the main body (1) and on which a heating target is to be placed,
    wherein the main body (1) includes an induction heating unit (3) that performs induction heating on the heating target,
    wherein the induction heating unit (3) includes
    a plurality of coils (31, 32a-32d, 7a-7d);
    a coil base (33,6) on which the plurality of coils (31, 32a-32d, 7a-7d) are provided; and
    an insulating member (34a-34d, 35a-35d, 8a-8d) provided on the coil base (33,6) and preventing adjacent ones of the coils from coming into contact with each other
    **characterized in that** the plurality of coils (31, 32a-32d) include
    a first coil (31) wound in a disc shape; and
    a plurality of second coils (32a-32d) provided around the first coil (31) and each having a concave portion in a part of an outer circumference thereof and a convex portion on a side thereof opposite the concave portion, wherein the concave portion extends along an outer circumference of the first coil (31), and the convex portion extends substantially parallel to the concave portion;

    wherein the insulating member (34a-34d, 35a-35d) prevents the first coil (31) and the second coils (32a-32d) from coming into contact with each other with deformation of any of the second coils (32a-32d), and
    wherein the insulating member (34a-34d, 35a-35d) has a height reaching a level higher than upper coil surfaces of the first coil (31) and each of the second coils (32a-32d).

2. The induction cooker of claim 1, wherein the insulating member (34a-34d) is provided between the first coil (31) and each of the second coils (32a-32d) and has a columnar shape.

3. The induction cooker of claim 2, wherein the insulating member (34a-34d) is in contact with at least the outer circumference of the first coil (31) and an outer circumferential surface of the concave portion of each of the second coils (32a-32d).

4. The induction cooker of any one of claims 1 to 3, wherein the insulating member (35a-35d) is provided between the first coil (31) and each of the second coils (32a-32d) and extends along substantially the entirety of the concave portion.

5. The induction cooker of claim 1, wherein the insulating member (34a-34d, 35a-35d, 36, 8a-8d) is provided between adjacent ones of the coils (31, 32a-32d, 7a-7d).

6. The induction cooker of claim 1, wherein the insulating member (8a-8d) has a larger width than a distance between adjacent ones of the coils (7a-7d) and is interposed in a portion of a gap between the adjacent coils.

7. The induction cooker of any one of claims 1 to 6, wherein the insulating member (34a-34d, 35a-35d, 36, 8a-8d) is formed integrally with the coil base (6, 33).

8. The induction cooker of any one of claims 1 to 7, wherein the insulating member (34a-34d, 35a-35d, 36, 8a-8d) is made of silicon.

9. The induction cooker of claim 8, wherein the silicon is provided up to a level higher than upper coil surfaces of the coils (31, 32a-32d, 7a-7d).

**Patentansprüche**

1. Induktionsherd, umfassend:

   einen Hauptkörper (1), der ein äußeres Gehäuse bildet, und eine obere Platte (2), die über einem oberen Bereich des Hauptkörpers (1) vorgesehen ist und auf der das aufzuheizende Gut anzuordnen ist, wobei der Hauptkörper (1) eine Induktionsheizeinheit (3) einschließt, die ein Induktionsheizen des aufzuheizenden Guts durchführt, wobei die Induktionsheizeinheit (3) umfasst eine Mehrzahl von Spulen (31, 32a - 32d, 7a - 7d); eine Spulenbasis (33, 6), auf der die Mehrzahl von Spulen (31, 32a - 32d, 7a - 7d) vorgesehen ist; und ein Isolierelement (34a - 34d, 35a - 35d, 8a - 8d), das an der Spulenbasis (33, 6) vorgesehen ist und verhindert, dass benachbarte Spulen in Kontakt miteinander kommen, **dadurch gekennzeichnet, dass** die Mehrzahl von Spulen (31, 32a - 32d) umfasst eine erste Spule (31), die in einer Scheibenform gewickelt ist; und eine Mehrzahl von zweiten Spulen (32a - 32d), die um die erste Spule (31) herum vorgesehen sind und jede einen konkaven Bereich in einem Teil ihres äußeren Umfangs und einen konvexen Bereich an ihrer zu dem konkaven Bereich entgegensetzten Seite, wobei der konkave Bereich sich entlang eines äußeren Umfangs der ersten Spule (31) erstreckt und der konvexe Bereich sich im Wesentlichen parallel zu dem konkaven Bereich erstreckt; wobei das Isolierelement (34a - 34d, 35a - 35d) verhindert, dass die erste Spule (31) und die zweiten Spulen (32a - 32) bei Verformung einer der zweiten Spulen (32a - 32d) miteinander in Kontakt kommen, und wobei das Isolierelement (34a - 34d, 35a - 35d) eine Höhe aufweist, die ein Niveau erreicht, das höher ist als die obere Spulenfläche der ersten Spule (31) und jeder der zweiten Spulen (32a - 32d).

2. Induktionsherd nach Anspruch 1, bei dem das Isolierelement (34a-34d) zwischen der ersten Spule (31) und jeder der zweiten Spulen (32a - 32d) vorgesehen ist und eine Säulenform aufweist.

3. Induktionsherd nach Anspruch 2, bei dem das Isolierelement (34a-34d) in Kontakt mit mindestens dem äußeren Umfang der ersten Spule (31) und einer äußeren Umfangsfläche des konkaven Bereichs jeder der zweiten Spulen (32a - 32d) ist.

4. Induktionsherd nach einem der Ansprüche 1 bis 3, bei dem das Isolierelement (35a - 35d) zwischen der ersten Spule (31) und jeder der zweiten Spulen (32a - 32d) vorgesehen ist und sich im Wesentlichen über die Gesamtheit des konkaven Bereichs erstreckt.

5. Induktionsherd nach Anspruch 1, bei dem das Isolierelement (34a - 34d, 35a - 35d, 36, 8a - 8d) zwischen benachbarten Spulen (31, 32a-32d, 7a - 7d) vorgesehen ist.

6. Induktionsherd nach Anspruch 1, bei dem das Isolierelement (8a - 8d) eine größere Breite als ein Abstand zwischen benachbarten Spulen (7a - 7d) aufweist und in einem Bereich eines Spalts zwischen den benachbarten Spulen eingefügt ist.

7. Induktionsherd nach einem der Ansprüche 1 bis 6, bei dem das Isolierelement (34a - 34d, 35a - 35d, 36, 8a - 8d) integral mit der Spulenbasis (6, 33) ausgebildet ist.

8. Induktionsherd nach einem der Ansprüche 1 bis 7, bei dem das Isolierelement (34a - 34d, 35a - 35d, 36, 8a - 8d) aus Silikon besteht.

9. Induktionsherd nach Anspruch 8, bei dem das Silikon bis zu einem Niveau vorgesehen ist, das höher ist als die oberen Spulenflächen der Spulen (31, 32a - 32d, 71 - 7d).

**Revendications**

1. Cuisinière à induction comprenant :

   un corps principal (1) qui forme une enveloppe extérieure, et une plaque supérieure (2) disposée sur une partie supérieure du corps principal (1) et sur laquelle doit être placée une cible à chauffer ;
dans laquelle le corps principal (1) comprend une unité de chauffage par induction (3) qui exécute un chauffage par induction sur la cible à chauffer ;
dans laquelle l'unité de chauffage par induction (3) comprend :

une pluralité de bobines (31, 32a - 32d, 7a - 7d) ;
une base des bobines (33, 6) sur laquelle sont disposées la pluralité de bobines (31, 32a - 32d, 7a - 7d) ; et
un élément isolant (34a - 34d, 35a - 35d, 8a - 8d) disposé sur la base des bobines (33, 6) et qui empêche des bobines adjacentes de venir en contact les unes avec les autres

**caractérisé en ce que** la pluralité de bobines (31, 32a - 32d) comprend :

une première bobine (31) enroulée en une forme de disque ; et
une pluralité de secondes bobines (32a - 32d) disposées autour de la première bobine (31), chacune d'elles présentant une partie concave dans une partie d'une circonférence extérieure de celle-ci, et une partie convexe d'un côté de celle-ci opposée à la partie concave, dans laquelle la partie concave s'étend le long d'une circonférence extérieure de la première bobine (31), et la partie convexe s'étend sensiblement parallèle à la partie concave ;

dans laquelle l'élément isolant (34a - 34d, 35a - 35d) empêche la première bobine (31) et les secondes bobines (32a - 32d) de venir en contact les unes avec les autres suite à une déformation de n'importe laquelle des secondes bobines (32a - 32d) ; et
dans laquelle l'élément isolant (34a - 34d, 35a - 35d) présente une hauteur qui atteint un niveau plus élevé que celui des surfaces de bobines supérieures de la première bobine (31) et de chacune des secondes bobines (32a - 32d).

2. Cuisinière à induction selon la revendication 1, dans laquelle l'élément isolant (34a - 34d) est disposé entre la première bobine (31) et chacune des secondes bobines (32a - 32d), et présente une forme de colonne.

3. Cuisinière à induction selon la revendication 2, dans laquelle l'élément isolant (34a - 34d) est en contact avec au moins la circonférence extérieure de la première bobine (31) et une surface circonférentielle extérieure de la partie concave de chacune des secondes bobines (32a - 32d).

4. Cuisinière à induction selon l'une quelconque des revendications 1 à 3, dans laquelle l'élément isolant (35a - 35d) est disposé entre la première bobine (31) et chacune des secondes bobines (32a - 32d), et s'étend sensiblement le long de la totalité de la partie concave.

5. Cuisinière à induction selon la revendication 1, dans laquelle l'élément isolant (34a - 34d, 35a - 35d, 36, 8a - 8d) est disposé entre les bobines adjacentes (31, 32a - 32d, 7a - 7d).

6. Cuisinière à induction selon la revendication 1, dans laquelle l'élément isolant (8a - 8d) présente une largeur supérieure à la distance entre des bobines adjacentes (7a - 7d), et est interposé dans une partie d'un espace situé entre les bobines adjacentes.

7. Cuisinière à induction selon l'une quelconque des revendications 1 à 6, dans laquelle l'élément isolant (34a - 34d, 35a - 35d, 36, 8a - 8d) est formé d'une pièce avec la base des bobines (6, 33).

8. Cuisinière à induction selon l'une quelconque des revendications 1 à 7, dans laquelle l'élément isolant (34a - 34d, 35a - 35d, 36, 8a - 8d) est réalisé en silicone.

9. Cuisinière à induction selon la revendication 8, dans laquelle le silicone est prévu jusqu'à un niveau plus élevé que celui des surfaces de bobines supérieures des bobines (31, 32a - 32d, 7a - 7d).

FIG. 1

FIG. 2

FIG. 3

FIG. 4

F I G. 5

F I G. 6

12

F I G. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1575336 A1